# EUROPÄISCHE PATENTANMELDUNG

(11) **EP 2 239 613 A1**
(43) Veröffentlichungstag der Anmeldung: **13.10.2010**
(21) Anmeldenummer: 10156826.9
(22) Anmeldetag: 18.03.2010
(51) Int. Cl.: G02B 21/08, G02B 21/12

(54) **Beleuchtungseinrichtung**

(30) Priorität: 08.04.2009 AT 5552009
(71) Anmelder: Photonic Optische Geräte Ges.m.b.H. & Co.KG, 1160 Wien (AT)
(72) Erfinder: Feger, Dieter, 1140 Wien (AT)
(74) Vertreter: Stocker, Kurt

(57) **Zusammenfassung**

Eine Beleuchtungseinrichtung (9) für ein mit einem Mikroskop (1) zu untersuchendes Objekt, mit einer Vielzahl von Lichtaustritten (12') eines an eine Lichtquelle angeschlossenen Lichtleiterfaserbündels und/oder von Leuchtdioden (12), welche Lichtaustritte in einem Gehäuse (9a) angeordnet sind, das oberhalb des zu untersuchenden Objekts am Mikroskop (1) zur Dunkelfeldbeleuchtung lösbar befestigbar ist und für den Strahlengang des Objektivs des Mikroskops(1) in seinen Wandungen Öffnungen (10a, 10b) aufweist, wobei die Lichtaustritte (12') geneigt zur optischen Achse des Objektivs angeordnet sind, und eine werkzeuglos vom Gehäuse (9a) entfernbare, das Leuchtfeld der Lichtaustritte (12') abdeckende licht-durchlässige Platte (11) vorgesehen ist, die als Auflagefläche für das zu untersuchende Objekt bei Dunkelfeldbeleuchtung von unten oder bei Hellfeld-Durchlichtbeleuchtung ausgebildet ist.

## Beschreibung

Die Erfindung betrifft eine Beleuchtungseinrichtung für ein mit einem Mikroskop zu untersuchendes Objekt, mit einer Vielzahl von Lichtaustritten eines an eine Lichtquelle angeschlossenen Lichtleiterfaserbündels und/oder Leuchtdioden, welche Lichtaustritte in einem Gehäuse angeordnet sind, das oberhalb des zu untersuchenden Objekts am Mikroskop zur Dunkelfeldbeleuchtung lösbar befestigbar ist und für den Strahlengang des Objektivs des Mikroskops in seinen Wandungen Öffnungen aufweist, wobei die Lichtaustritte geneigt zur optischen Achse des Objektivs angeordnet sind.

Für unterschiedliche Beleuchtungsarten, z.B. Dunkelfeldbeleuchtung von oben, Dunkelfeldbeleuchtung von unten und Hellfelddurchlichtbeleuchtung, eines Objekts bei Untersuchungen mit einem Mikroskop ist bisher für jede Beleuchtungsart stets eine eigene, speziell ausgebildete Beleuchtungseinrichtung erforderlich. Dies verursacht für den Laboranten eine Lagerhaltung von diversen speziell ausgebildeten Beleuchtungseinrichtungen und auch Kosten für die Anschaffung der unterschiedlichen Beleuchtungseinrichtungen.

Der Erfindung liegt die Aufgabe zugrunde, eine einzige Beleuchtungseinrichtung zu schaffen, die es ermöglicht, unterschiedliche Beleuchtungsarten bei der Mikroskopie vorzunehmen und somit die Anzahl der erforderlichen Beleuchtungseinrichtungen zu reduzieren.

Gemäß der Erfindung wird daher für eine Beleuchtungseinrichtung der eingangs erwähnten Art vorgeschlagen, dass eine werkzeuglos vom Gehäuse entfernbare, das Leuchtfeld der Lichtaustritte abdeckende lichtdurchlässige Platte vorgesehen ist, die als Auflagefläche für das zu untersuchende Objekt bei Dunkelfeldbeleuchtung von unten oder bei Hellfelddurchlichtbeleuchtung ausgebildet ist.

Mit dieser erfindungsgemäßen Konstruktion wird in vorteilhafter Weise eine Beleuchtungseinrichtung für die drei unterschiedliche Beleuchtungsarten Dunkelfeldbeleuchtung von oben, Dunkelfeldbeleuchtung von unten und Hellfelddurchlichtbeleuchtung geschaffen, die einfachst aufgebaut und einfachst handhabbar ist, da lediglich eine lichtdurchlässige Platte vom Gehäuse der Beleuchtungseinrichtung entfernt oder mit dem Gehäuse verbunden werden muss.

In einer bevorzugten weiteren Ausführungsform der Erfindung ist vorgesehen, dass die lichtdurchlässige Platte in oder oberhalb einer der Öffnungen des Gehäuses gelagert ist, wobei die Fläche der lichtdurchlässigen Platte zur Auflage des zu untersuchenden Objekts vorgesehen ist. Hierdurch kann die Beleuchtungseinrichtung baulich kompakt ausgebildet werden und als Objekt-Leuchttisch verwendet werden.

In weiterer Ausgestaltung der Erfindung wird vorgeschlagen, dass das Gehäuse als Hohlkörper ausgebildet ist, in dessen Hohlraum die Lichtauslässe der Leuchtdioden und/oder des Lichtleiterfaserbündels angeordnet sind, wobei vorzugsweise die Lichtauslässe im Hohlraum vertieft angeordnet sind. Hierdurch sind die Lichtleiterfasern oder die Leuchtdioden geschützt vor mechanischen Beschädigungen eingebaut.

Einfach, stabil und kostengünstig lässt sich die Beleuchtungseinrichtung herstellen, wenn nach einem weiteren Merkmal der Erfindung vorgesehen wird, dass das Gehäuse zwei zueinander konzentrisch angeordnete zylindrische Wandungen aufweist und die Lichtaustritte im Hohlraum zwischen den zylindrischen Wandungen angeordnet, sind.

Nach einem bevorzugten Merkmal der Erfindung ist vorgesehen, dass die lichtdurchlässige Platte mit einem Fassungsring ausgerüstet ist, der am Gehäuse über oder in mindestens einer der Öffnungen manuell lösbar fixierbar ausgebildet ist. Hierdurch kann ohne Werkzeug und durch den Laboranten selbst in einfachster Weise die Umrüstung für die unterschiedlichen Beleuchtungsarten vorgenommen werden.

In weiterer Ausgestaltung der Erfindung wird vorgeschlagen, dass ein Reflektor vorgesehen ist, der unter oder in mindestes einer der Öffnungen des Gehäuses manuell lösbar fixierbar ist. Dieser Reflektor führt in vorteilhafter Weise das über Lichtleiter oder Leuchtdioden nicht direkt zum zu untersuchenden Objekt emittierte Licht zur lichtdurchlässigen Platte bzw. an das Objekt und ist auch zur Homogenisierung des an das Objekt geführten Lichtes vorgesehen.

Nach einem weiteren Merkmal der Erfindung wird vorgeschlagen, dass der Reflektor mit einem weiteren Fassungsring ausgerüstet ist, der unter oder in mindestens einer der Öffnungen des Gehäuses manuell lösbar fixierbar ausgebildet ist. Hierdurch kann auch die Handhabung des Reflektors in einfachster Weise durch den Laboranten ohne Werkzeug vorgenommen werden.

Um in vorteilhafter Weise die Helligkeit des Lichtes am Objekt bei Dunkelfeldbeleuchtung von unten oder bei Hellfelddurchlichtbeleuchtung oder die Höhenposition des Objektes unter dem Objektiv des Mikroskops einstellen zu können, wird in weiterer Ausgestaltung der Erfindung vorgeschlagen, dass der Fassungsring für die lichtdurchlässige Platte und/oder der weitere Fassungsring für den Reflektor durch zwei konzentrisch angeordnete, ineinander verschiebbare Rohrstücke gebildet ist.

Sind nach einem weiteren Merkmal der Erfindung die lichtdurchlässige Platte und/oder der Reflektor manuell lösbar mit dem Fassungsring verbunden, so kann je nach den Erfordernissen an eine spezielle Beleuchtung, die Glasplatte aus dem Fassungsring, bzw. der Reflektor aus dem weiteren Fassungsring entfernt und durch anders spezifizierte Bauteile ersetzt werden. Dies reduziert in vorteilhafter Weise die Anschaffungskosten und den Platzbedarf für die Lagerung der Beleuchtungseinrichtung.

Um bei der Dunkelfeldbeleuchtung von unten oder bei Hellfelddurchlichtbeleuchtung eine gegebenenfalls erforderliche höhere Lichtintensität oder eine andere Lichtrichtung zu ermöglichen, wird in weiterer Ausgestaltung der Erfindung vorgeschlagen, dass die innere Wandung des Gehäuses mindestens eine An- und/oder Auflagefläche für ein in den Hohlraum einbringbares weiteres Gehäuse aufweist, das als Träger für zusätzliche Leuchtdioden ausgebildet ist.

In weiterer Ausgestaltung der Erfindung wird vorgeschlagen, dass das Gehäuse an seiner Innenwandung elektrische Kontakte aufweist, die zur Energieversorgung der Leuchtdioden des weiteren Gehäuses vorgesehen sind, wobei die Energieversorgung dieser zusätzlichen Leuchtdioden über die elektrische Leitung für im Gehäuse angeordnete Leuchtdioden vorgesehen ist. Hierdurch wird in einfacher Weise lediglich durch das Zusammenführen der beiden Gehäuse auch die elektrische Kontaktierung durchgeführt.

Um das von der Beleuchtungseinrichtung abgestrahlte Licht in einfachster Weise an die Untersuchungserfordernisse anpassen zu können, wird in weiterer Ausgestaltung der Erfindung vorgeschlagen, dass die lichtdurchlässige Platte als Milchglasplatte, Fresnellinse, und/oder als Farbglasplatte ausgebildet ist.

Die Erfindung schafft somit eine modulartig konzipierte Beleuchtungseinrichtung für unterschiedliche Beleuchtungsarten bei der Mikroskopie, wobei in vorteilhafter Weise nur eine Lichtquelle mit Lichtauslässen in einem einzigen Gehäuse, wie Lichtleiter-Endstücke oder Leuchtdioden, mit einer entfernbaren lichtdurchlässigen Platte und/oder mit einem entfernbaren Reflektor kombiniert werden muss.

In den Zeichnungen ist die erfindungsgemäße Beleuchtungseinrichtung in mehreren Ausführungsformen beispielsweise und schematisch dargestellt. Hierbei zeigen
- Fig. 1: ein Mikroskop mit am Objektiv befestigter Beleuchtungseinrichtung zur Dunkelfeldbeleuchtung von oben,
- Fig, 2: ein Mikroskop mit auf der Mikroskopbasis angeordneter Beleuchtungseinrichtung zur Dunkelfeld- oder Hellfelddurchlichtbeleuchtung,
- Fig.3: die Beleuchtungseinrichtung mit ringförmig angeordneten Leuchtdioden in Ansicht von unten,
- Fig.4: die Beleuchtungseinrichtung im Schnitt gemäß der Schnittlinie A-A in Fig. 3, montiert am Objektiv des Mikroskops,
- Fig.5: eine erste Ausführungsform der Beleuchtungseinrichtung im Schnitt, angeordnet auf der Mikroskopbasis und ausgerüstet mit lichtdurchlässiger Platte,
- Fig. 6: eine zweite Ausführungsform der Beleuchtungseinrichtung im Schnitt, angeordnet auf der Mikroskopbasis und ausgerüstet mit lichtdurchlässiger Platte und Reflektor, und
- Fig. 7: eine dritte Ausführungsform der Beleuchtungseinrichtung mit einem Gehäuse mit zusätzlichen Leuchtdioden.

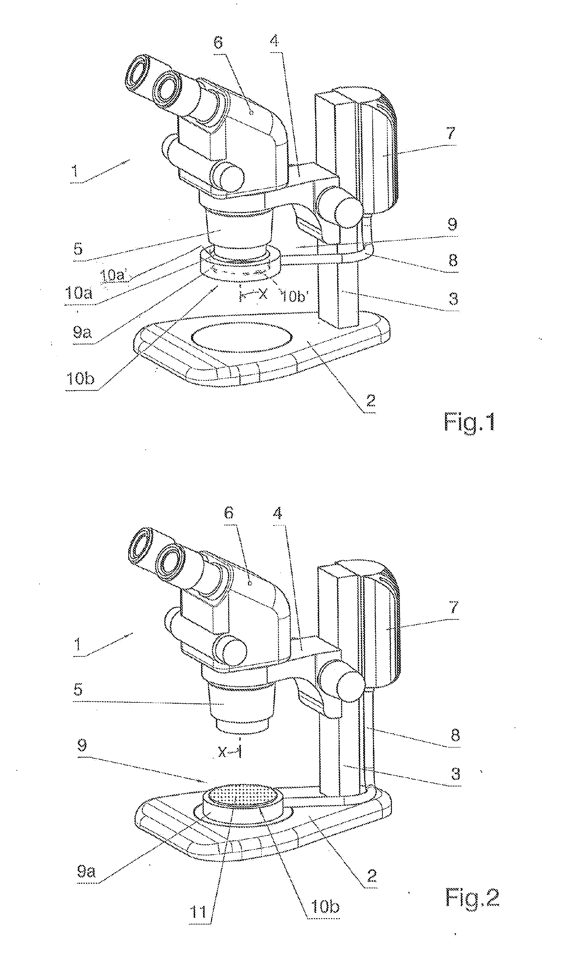

In Fig. 1 ist mit 1 ein Stereomikroskop bezeichnet, das eine Mikroskopbasis oder Bodenplatte 2, einen Mikroskopständer 3 und einen Haltearm 4 für ein mit einem Objektiv 5 mit einer optischen Achse X ausgerüstetes optisches Beobachtungssystem 6 aufweist. Ein zu untersuchendes, nicht dargestelltes, Objekt wird auf die Mikroskopbasis bzw. die Bodenplatte 2 unterhalb des Objektives 5 aufgelegt.

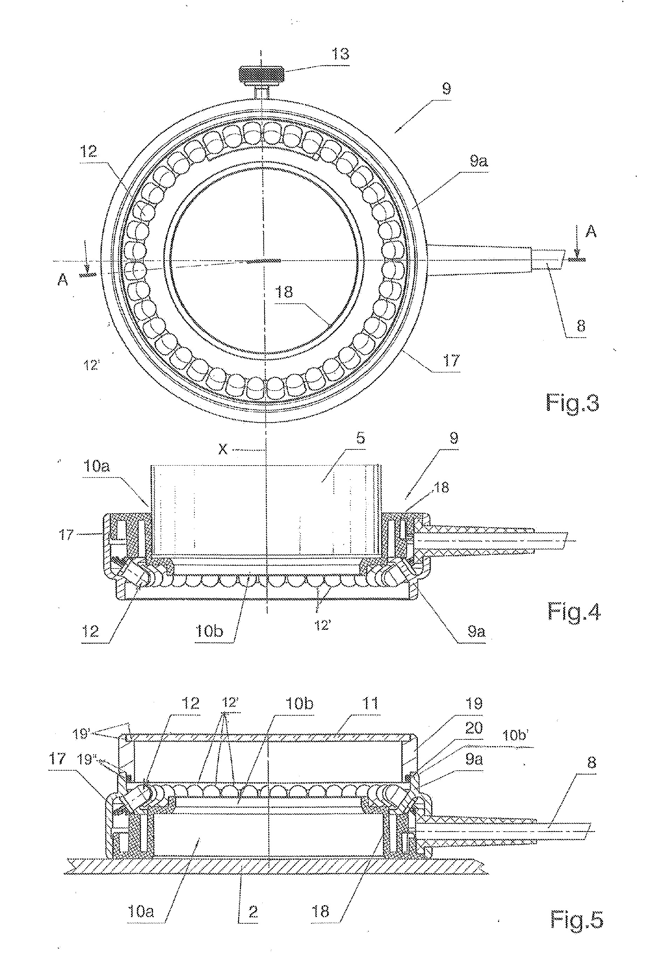

Am Mikroskopständer 3 ist eine elektrische Lichtquelle 7 angeordnet, die mit einer Lichtquelle in Form einer nicht dargestellten Halogen-Kaltlichtspiegellampe oder einer nicht dargestellten Hochleistungs-Leuchtdiode ausgerüstet ist. Über ein optisches Lichtleiterfaserbündel, das im flexiblen Schlauch 8 angeordnet ist, wird Licht in das Gehäuse 9a der Beleucbtungseinrichtung 9 geführt, wobei die Lichtaustritte der Lichtleiterfasern ringförmig an der inneren Wandung des als Hohlzylinder ausgebildeten Gehäuses 9a angeordnet sind. Das Objektiv 5 des Mikroskops 1 ragt durch eine von einer Kante 10a' berandete Öffnung 10a in der oberen Wandung und - bei entsprechender Einstellung entlang der Achse X - durch eine von einer (strichliert dargestellten) Kante 10b' berandeten Öffnung 10b in der unteren Wandung des Gehäuses 9a. Die Lichtaustritte sind dann ähnlich denen der in Fig. 5 dargestellten Dioden 12, d.h. die Lichtleitfasern aus dem Bündel 8 erstrecken sich bis zu der Stelle, wo in Fig. 5 die Lichtaustritte 12' dargestellt sind.

Demgemäß sind die in Fig. 1 nicht dargestellten Lichtaustritte der Lichtleiterfasern (vgl. die analogen Lichtaustrittsflächen 12' von Leuchtdioden 12 in den Fig. 3 und 4) sind geneigt zur Achse X des Objektivs 5 zur Mikroskopbasis 2 gerichtet, und mit dieser Anordnung der Beleuchtungseinrichtung 9 wird eine Dunkelfeldbeleuchtung von oben eines auf der Mikroskopbasis 2 befindlichen nicht dargestellten zu untersuchenden Objektes durchgeführt. Vorzugsweise sind die Lichtsauslässe vertieft im Gehäuse 9a untergebracht, beispielsweise wie das etwa an Hand der vertieften Anbringung der Leuchtdioden 12 in Fig 5 erkennbar ist.

Das Gehäuse 9a der Beleuchtungseinrichtung ist manuell (und damit werkzeugfrei) lösbar am äußeren Tubus des dargestellten Objektivs 5, beispielsweise mittels Klemmschraube 13 wie in Fig. 3 gezeigt, befestigt. Das Gehäuse 9a mit den Lichtaustritten kann aber auch am Haltearm 4 oder am Mikroskopständer 3 oder an einem anderen stabilen Bauteil des Mikroskops 1 lösbar befestigt sein.

Die Beleuchtungseinrichtung 9 kann aber auch zur Dunkelfeldbeleuchtung von unten und zur Hellfelddurchlichtbeleuchtung des zu untersuchenden Objektes verwendet werden. Hiezu wird gemäß Fig. 2 das Gehäuse 9a auf die Mikroskopbasis 2 aufgelegt, und zwar derart, dass die untere Wandung mit der Öffnung 10b nach oben, zum Objektiv 5 gerichtet ist und die Wandung mit der Öffnung 10a auf der Mikroskopbasis 2 aufliegt.

Zur Auflage des zu untersuchenden Objekts ist die dem Objektiv 5 zugewandte Öffnung 10b gemäß Fig. 2 mit einer Platte 11 abgedeckt. Diese Platte 11 ist aus lichtdurchlässgem Werkstoff hergestellt und kann als Milchglasscheibe, als Klarglasscheibe, als Fresnellinse, als Farbfilter od. dgl. Oder aus einer Kombination dieser Möglichkeiten ausgebildet sein. Weiters kann diese Platte 11 mit lichtundurchlässigen Masken ausgerüstet sein, durch die einen oder mehrere Bereiche der Lichtaustritte abgeschattet bzw. ausgewählt werden können. Wie aus Fig. 5 ersichtlich, ist die Platte 11 in das Gehäuse 9a von oben eingesetzt, so dass sie werkzeugfrei bzw. manuell auch leicht wieder davon lösbar ist, was besonders für die Lagerhaltung und/oder für ein Auswechseln der Platte 11 von Vorteil ist.

Im flexiblen Schlauch 8 können anstelle von optischen Lichtleitern oder zusätzlich dazu auch elektrische Leiter zur Energiezufuhr für Leuchtdioden angeordnet sein, die im Gehäuse 9a der Beleuchtungseinrichtung 9 angeordnet und deren Lichtaustritte zur Achse des Objektivs 5 und zum zu untersuchenden Objekt gerichtet sind. Im Bauteil 7 am Mikroskopständer 3 sind die elektronischen Baustufen angeordnet, die zur Energieversorgung der Leuchtdioden in der Beleuchtungseinrichtung 9 erforderlich sind.

In den folgenden Ausführungsbeispielen tragen Komponenten ähnlicher Funktion dieselben Bezugszeichen, wie oben beschrieben.

In Fig. 3 ist eine Beleuchtungseinrichtung 9 dargestellt, die ein Gehäuse 9a aufweist, das zwei koaxiale zylindrische Wandungen 17, 18 besitzt, wobei zwischen den zylindrischen Wandungen 17, 18 eine Vielzahl von Leuchtdioden 12 ringförmig angeordnet sind. Die Energiezufuhr für die Leuchtdioden 12 erfolgt über elektrische Leiter im flexiblen Schlauch 8.

Die Fig. 4 zeigt einen Schnitt der Beleuchtungseinrichtung 9 gemäß der Schnittlinie A-A der Fig. 3. Zur Dunkelfeldbeleuchtung des mit dem Mikroskop zu untersuchenden Objekts von oben wird das Gehäuse 9a der Beleuchtungseinhchtung 9 von unten nach oben auf das Objektiv 5 aufgeschoben und mittels manuell bedienbarer Klemmschraube 13, die in Fig. 3 dargestellt ist, am Tubus des Objektivs 5 fixiert. Hierbei ragt das Objektiv 5 durch die Öffnung 10a in der oberen Wandung des Gehäuses 9a in die Beleuchtungseinrichtung 9. Die Öffnung 10b in der unteren Wandung des Gehäuses 9a ermöglicht den freien Durchtritt des Strahlenganges des Objektivs 5 zum nicht dargestellten Objekt.

Zur Dunkelfeldbeleuchtung von unten des nicht dargestellten Objekts bzw. auch zur Hellfelddurchlichtbeleuchtung wird die Beleuchtungseinrichtung 9 vom Objektiv 5 entfernt, und gemäß. Fig. 5 wird dann das Gehäuse 9a mit zum Objektiv 5 gerichteter Öffnung 10b auf die Mikroskopbasis 2 aufgelegt und die nun oben liegende Öffnung 10b mit der lichtdurchlässigen Platte 11 abgedeckt, die vorteilhaft in eine stufenförmige Haltefläche 19' eines Fassungsringes (auch andere Formen als ringförmig wäre möglich, beispielsweise polygonale) eingelegt wird

Die lichtdurchlässige Platte 11 weist also einen Fassungsring 19 in Form eines Hohlzylinders auf, der auf die äußere Wandung 17 des Gehäuses 9a aufgesteckt ist und somit werkzeugfrei und manuell lösbar an dem Gehäuse 9a fixierbar ist. Die Höhe des Fassungsrings 19 ist derart gewählt, dass das von den ringförmig angeordneten Leuchtdioden 12 unter großem Winkel emittierte Licht möglichst gleichmäßig die Platte 11 von unten und somit das (nicht dargestellte) Objekt beleuchtet.

Zur manuell lösbaren Fixierung der lichtdurchlässigen Platte 11 am Gehäuse 9a weist der zylindrische Fassungsring 19 an seiner dem Gehäuse 9a zugewandten Stirnfläche eine ringförmige Stufe 19 auf, und zwischen dieser Stufe 19" und der Innenfläche der äußeren Wandung 17 ist ein aus elastischem Werkstoff gefertigter Ring 20 angeordnet. Natürlich könnte der Ring 20 statt am Fassungsring 19 auch in einer Innennut der Kante 10b' angebracht sein. Ferner ist klar, dass ein solcher Ring 20 auch im Bereiche der gestuften Haltefläche 19' angebracht werden könnte. Selbstverständlich kann diese Fixierung auch auf jede andere, eine manuelle Lösbarkeit erlaubende Weise, beispielsweise mit elastischen Klammern, z.B. von oben (zum Lösen z.B. um eine Achse wegdrehbar) oder von der Seite am Umfang angreifend, oder mittels in einer Parallelebene oberhalb der Ebene der Platte 11 einschraubbaren Halteschrauben, erfolgen.

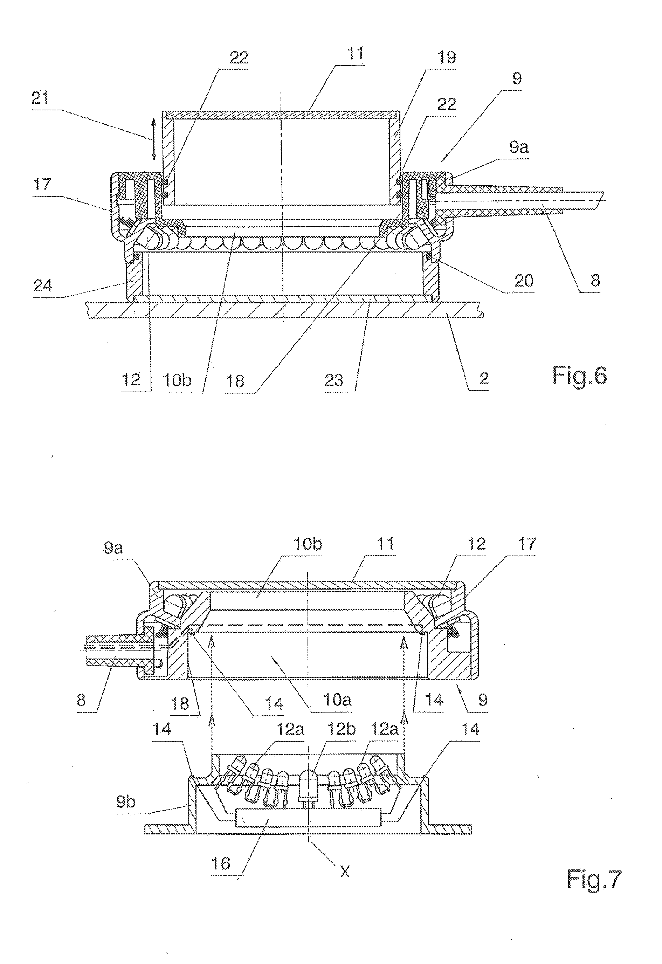

Im Gegensatz zur anhand von Fig. 5 beschriebenen Anordnung bzw. Ausführungsform der Beleuchtungseinrichtung 9 ist gemäß Fig. 6 die Beleuchtungseinrichtung 9 derart auf die Mikroskopbasis 2 aufgelegt, dass die Leuchtdioden 12 zur Mikroskopbasis 2 geneigt ausgerichtet sind.

Gemäß den Fig. 5 und 6 ist die oben liegende Öffnung 10a des Gehäuses 9a mit der lichtdurchlässigen, kreisförmigen Platte 11 abgedeckt. Die Platte 11 wiederum ist mit einem zylindrischen Fassungsring 19 ausgerüstet. Die Breite des Fassungsringsringes 19 gemäß Fig. 6 mag größer sein als die Breite des Fassungsringes 19 gemäß Fig. 5. Der Durchmesser des Fassungsrings 19 gemäß Fig. 6 ist kleiner als der Durchmesser der inneren zylindrischen Wandung 18 des Gehäuses 9a, und die Glasplatte 11 ist mit ihrem Fassungsring 19 in die Öffnung 10a des Gehäuses 9a entsprechend dem Pfeil 21 höhenverschiebbar eingesetzt. Zwischen dem Fassungsring 19 und der innenwandung 18 des Gehäuses 9a sind elastisch verformbare Ringe 22, vorzugsweise aus Gummi oder Kunststoff, angeordnet. Diese Ausbildung aus zwei gegeneinander bzw, ineinander verschiebbaren Rohrstücken ermöglicht eine manuell lösbare Klemmung der mit dem Fassungsring 19 ausgerüsteten lichtdurchlässigen Platte 11 in jeder möglichen Höhenposition.

Die Öffnung 10b des Gehäuses 9a ist mit einem auf die äußere Wandung 17 des Gehäuses 9a (beispielsweise analog zur Platte 11) aufgesteckten Reflektor 23 abgedeckt. Dieser Reflektor 23 ist mit dem zylindrischen Fassungsring 24 ausgerüstet, der gleichartig wie der Fassungsring 19, beschrieben anhand der Ausführungsform gemäß Fig. 5, ausgebildet und am Gehäuse 9a werkzeugfrei bzw. manuell lösbar befestigt ist. Die Innenwandung des Reflektors 23 ist verspiegelt oder mit weißer Oberfläche ausgebildet. Ebenso kann die Innenwandung des Fassungsrings 24, aber auch die Innenwandung des Fassungsrings 19 gemäß der Fig. 5 und 6 verspiegelt oder mit weißer Oberfläche ausgebildet sein.

In nicht dargestellter Weise kann die Dimensionierung und geometrische Ausbildung des Gehäuses 9a und der lichtdurchlässigen Platten 11, deren Fassungsringe 19, bzw. auch des Reflektors 23 derart erfolgen, dass unterschiedlichste Kombinationen der Platte 11 und des Reflektors 23 mit dem Gehäuse 9a möglich sind, d.h. die lichtdurchlässige Platte 11 samt Fassungsring 19 und der mit der Reflektor 23 samt einem Fassungsring 24 können über jeder der Öffnungen 10a und 10b des die Lichtaustritte von Lichtleitern bzw. Lichtleitfasern oder von Leuchtdioden 12 als Lichtquelle tragenden Gehäuses 9a angeordnet werden. Hierdurch ist eine Vielzahl von Beleuchtungsmöglichkeiten für das (nicht dargestellte) zu untersuchende Objekt gegeben.

Anstelle der Ringe 20 und 22 aus elastischen Werkstoff können auch andere Klemm-oder Halteeinrichtungen vorgesehen werden, die es ermöglichen, die Bauteile der Beleuchtungseinrichtung 9 manuell lösbar zu fixieren. Außer den oben genannten Möglichkeiten können diese Einrichtungen als Bajonettverschluss, als federbelastete Kugelrastverschlüsse, od. dgl. ausgebildet sein.

In den Fig. 3, 4, 5 und 6 sind die Leuchtdioden 12 einreihig, ringförmig angeordnet. Es können aber auch weitere Leuchtdioden bspw. in konzentrischen Ringen entlang der Achse X oder in einer einzigen Ebene und/oder in bestimmten Segmenten od. Sektoren im Gehäuse 9a angeordnet sein.

In Fig. 7 ist eine mit der Beleuchtungseinrichtung 9 dargestellt, wobei aber für die Dunkelfeldbeleuchtung von unten und für die Hellfeid-Durchlichtbeleuchtung des Objekts ein weiteres Gehäuse 9b vorgesehen ist, das als Träger für zusätzliche Leuchtdioden 12a und für die Leuchtdiode 12b vorgesehen ist. Dies ist eine weitere Kombinationsmöglichkeit im Rahmen der Erfindung.

Dieses weitere Gehäuse 9b ist formschlüssig mit der zylindrischen Innenwandung 18 des Gehäuses 9a ausgebildet und wird in Richtung der strichlierten Pfeile in das Gehäuse 9a eingeschoben. Die elektrische Energieversorgung der zusätzlichen Leuchtdioden 12a und 12b im weiteren Gehäuse 9b erfolgt über elektrische Kontakte 14 an beiden Gehäusen 9a und 9b.

Die in der Rotationsachse X (die ja auch die Achse des Objektives 5 ist) der Beleuchtungseinrichtung 9 positionierte Leuchtdiode 12 b kann für bestimmte Objektuntersuchungen von Vorteil sein, ebenso eine selektive Aktivierung einzelner Leuchtdioden aus der Gruppe der Leuchtdioden 12a etwa durch entsprechende Schalter. Zur Ansteuerung dieser zusätzlichen Leuchtdioden 12a und/oder 12b kann im weiteren Gehäuse 9b eine elektronische Baustufe 16 fest angeordnet sein, die in der Lage der Fig. 7 beispielsweise von unten bedienbar ist.

Je nach durchzuführender Untersuchung können Beleuchtungseinrichtungen auch mit Farblicht emittierenden Leuchtdioden ausgerüstet sein, auch sind Kombinationen von unterschiedliches Farblicht emittierenden Leuchtdioden für bestimmte Untersuchungen, wie etwa spektroskopische Untersuchungen, zweckdienlich.

Das weitere Gehäuse 9b stellt einen Adapter für die Erhöhung der Lichtleistung bei der Dunkelfeldbeleuchtung von unten, aber auch bei der Durchlicht-Hellfeldbeleuchtung dar. Dieser aus dem weiteren Gehäuse 9b und den zusätzlichen Leuchtdioden 12a, 12b gebildete Adapter kann, falls für eine bestimmte Objektbeleuchtung zweckmäßig, auch unabhängig von der Beleuchtungseinrichtung 9, als Spot-Beleuchtungseinrichtung (punktweise Beleuchtung) für das zu untersuchende Objekt verwendet werden.

Die Form des Gehäuses 9a der Beleuchtungseinrichtung 9 ist nicht auf eine ringförmige Ausbildung beschränkt. Das Gehäuse 9a bzw. dessen Grundriss kann auch als Vieleck, wie als Rechteck, Fünfeck, Sechseck, Achteck od. dgl. ausgebildet sein.

Die Beleuchtungseinrichtung 9 kann auch derart in ihrer Form ausgebildet sein, dass sie zur Dunkelfeldbeleuchtung von unten und zur Hellfelddurchlichtbeleuchtung in einer Vertiefung in der Mikroskopbasis gelagert ist, wobei die Vertiefung derart ausgebildet sein kann, dass die Oberfläche der lichtdurchlässigen Platte der Beleuchtungseinrichtung in der Ebene der dem Objektiv des Mikroskops zugewandten oberen Fläche der Mikroskopbasis liegt.

Die Erfindung ist auf die beschriebenen Ausführungsbeispiele nicht beschränkt, sondern kann - wie oben erwähnt - oder durch Kombination mit Merkmalen des Standes der Technik auf die verschiedenste Weise abgewandelt werden.

## Patentansprüche

1. Beleuchtungseinrichtung (9) für ein mit einem Mikroskop (1) zu untersuchendes Objekt, mit einer Vielzahl von Lichtaustritten (12') eines an eine Lichtquelle (7) angeschlossenen Lichtieiterfaserbündels (8) und/oder von Leuchtdioden (12), welche Lichtaustritte (12') in einem Gehäuse (9a) angeordnet sind, das oberhalb des zu untersuchenden Objekts am Mikroskop (1) zur Dunkelfeldbeleuchtung lösbar befestigbar ist und für den Strahlengang des Objektivs (5) des Mikroskops (1) in seinen Wandungen (17) Öffnungen (10a, 10b) aufweist, wobei die Lichtaustritte (12') geneigt zur optischen Achse (X) des Objektivs (5) angeordnet sind, **dadurch gekennzeichnet, dass** eine werkzeuglos vom Gehäuse (9a) entfernbare, das Leuchtfeld der Lichtaustritte (12') abdeckende lichtdurchlässige Platte (11) vorgesehen ist, die als Auflagefläche für das zu untersuchende Objekt bei Dunkelfeldbeleuchtung von unten oder bei Hellfeld-Durchlichtbeleleuchtung ausgebildet ist.

2. Beleuchtungseinrichtung nach Anspruch 1, **dadurch gekennzeichnet, dass** die lichtdurchlässige Platte (11) in oder oberhalb einer der Öffnungen (10a, 10b) des Gehäuses (9a) gelagert ist, wobei die Fläche der lichtdurchlässigen Platte (11) zur Auflage des zu untersuchenden Objekts vorgesehen ist.

3. Beieuchtungseinrichtung nach Anspruch 1 oder 2, **dadurch gekennzeichnet, dass** das Gehäuse (9a) als Hohlkörper ausgebildet ist, in dessen Hohlraum die Lichtauslässe (12') der Leuchtdioden (12) und/oder des Lichtleiterfaserbündels (8) angeordnet sind, wobei vorzugsweise die Lichtauslässe (12') im Hohlraum des Gehäuses (9a) vertieft angeordnet sind.

4. Beleuchtungseinrichtung nach einem der Ansprüche 1 bis 3, **dadurch gekennzeichnet, dass** das Gehäuse (9a) zwei zueinander konzentrisch angeordnete zylindrische Wandungen (17, 18) aufweist und die Lichtaustritte (12') im Hohlraum zwischen den zylindrischen Wandungen (17, 18) angeordnet sind.

5. Beleuchtungseinrichtung nach einem der Ansprüche 1 bis 4, **dadurch gekennzeichnet, dass** die lichtdurchlässige Platte (11) mit einem Fassungsring (19) ausgerüstet ist, der am Gehäuse (9a) über oder in mindestens einer der Öffnungen (10a, 10b) manuell lösbar fixierbar ausgebildet ist.

6. Beleuchtungseinrichtung nach einem der vorhergehenden Ansprüche, **dadurch gekennzeichnet, dass** ein Reflektor (23) vorgesehen ist, der unter oder in mindestes einer der Öffnungen (10a, 10b) des Gehäuses (9a) manuell lösbar fixierbar ist.

7. Beleuchtungseinrichtung nach Anspruch 6, **dadurch gekennzeichnet, dass** der Reflektor (213) mit einem weiteren Fassungsring (24) ausgerüstet ist, der unter oder in mindestens einer der Öffnungen (10a, 10b) des Gehäuses (9a) manuell lösbar fixierbar ausgebildet ist.

8. Beleuchtungseinrichtung nach einem der Ansprüche 5 bis 7, **dadurch gekennzeichnet, dass** der Fassungsring (19) für die lichtdurchlässige Platte (11) und/oder der weitere Fassungsring (24) für den Reflektor (23) durch zwei konzentrisch angeordnete, ineinander verschiebbare Rohrstücke (19, 22) gebildet ist.

9. Beleuchtungseinrichtung nach einem der Ansprüche 5 bis 8, **dadurch gekennzeichnet, dass** die lichtdurchlässige Platte (11) und/oder der Reflektor (23) manuell lösbar mit ihrem Fassungsring (19, 24) verbunden sind.

10. Beleuchtungseinrichtung nach einem der vorhergehenden Ansprüche, **dadurch gekennzeichnet, dass** die innere Wandung (18) des Gehäuses (9a) mindestens eine An-und/oder Auflagefläche für ein in den Hohlraum einbringbares weiteres Gehäuse (9b) aufweist, das als Träger für zusätzliche Leuchtdioden (12a, 12b) ausgebildet ist.

11. Beleuchtungseinrichtung nach Anspruch 10, **dadurch gekennzeichnet, dass** das Gehäuse (9a) an seiner Innenwandung (18) elektrische Kontakte (14) aufweist, die zur Energieversorgung der Leuchtdioden (12a, 12b) des weiteren Gehäuses (9b) vorgesehen sind, wobei die Energieversorgung dieser zusätzlichen Leuchtdioden (12a, 12b) über die elektrische Leitung (8) für im Gehäuse (9a) angeordnete Leuchtdioden (12) vorgesehen ist.

12. Beleuchtungseinrichtung nach einem der Ansprüche 1 bis 11, **dadurch gekennzeichnet, dass** die lichtdurchlässige Platte (11) als Milchglasplatte, Fresnellinse, und/oder als Farbglasplatte ausgebildet ist.
